# EUROPEAN PATENT APPLICATION

(11) **EP 3 702 198 A1**
(43) Date of publication of application: **02.09.2020**
(21) Application number: 17929472.3
(22) Date of filing: 13.12.2017
(51) Int. Cl.: B60L 15/20, B23K 7/00, B23K 37/02

(54) **TRAVELING TRUCK**

(30) Priority: 24.10.2017 JP 2017204883
(71) Applicant: Koike Sanso Kogyo Co., Ltd., Tokyo 133-0057 (JP)
(72) Inventor: HASEGAWA, Shun, Tokyo 133-0057 (JP); MINAHARA, Masatoshi, Tokyo 133-0057 (JP); OHTA, Satoshi, Tokyo 133-0057 (JP); KATO, Daisuke, Tokyo 133-0057 (JP)
(74) Representative: Westphal, Mussgnug & Partner Patentanwälte mbB
(86) International application number: PCT/JP2017/044747
(87) International publication number: WO 2019/082402

(57) **Abstract**

[Problem] To facilitate operations performed when starting and ending machining of a workpiece. [Solution] A traveling truck A has: a drive motor 25; a three-position selection switch 12; a press-button switch 13 for enabling travel at a preset secondary speed; a speed setting dial 14 for setting a machining speed or the secondary speed; and a control unit 20 that stores the machining speed and the secondary speed in accordance with the operation amount of the speed setting dial, controls the rotational direction and the rotational speed of the drive motor in response to a travel signal from the three-position selection switch, and controls the rotational speed corresponding to the secondary speed while holding the rotational direction of the drive motor when a secondary speed signal is generated from the press-button switch and the secondary speed signal is maintained.

## Description

### Technical Field

The present invention relates to a traveling truck that, when cutting or welding a workpiece with a torch mounted thereon, enables machining start work or end work to be surely performed.

### Background Art

There has been used a traveling truck that is mounted with a torch such as a gas cutting torch or a plasma cutting torch for cutting a workpiece or a welding torch for welding a workpiece and travels while operating the torch to cut or weld a workpiece represented by a steel plate. When the workpiece is cut or welded using the torch mounted on the traveling truck, cutting speed or welding speed is set according to conditions such as the plate thickness and the material of the workpiece and specification conditions such as roughness of a cut surface and weld beads. However, when the cutting or the welding is performed on the workpiece, since the workpiece is in a normal temperature state, target machining cannot be started at speed that keeps the cutting speed or the welding speed described above.

For example, a case in which cutting of the workpiece is started from an end face using the cutting torch is explained. A general traveling truck used in cutting a workpiece is configured such that cutting speed is performed by operating a speed setting dial and is configured such that a driving motor starts rotation simultaneously with turn-on of a power supply and traveling can be discontinued or continued by connecting and disconnecting the driving motor and wheels via a clutch.

When the thickness of the workpiece is relatively small, prior to the cutting being started, preheating flame is formed in a nozzle attached to the cutting torch and cutting oxygen is jetted and the power supply is turned on to bring the nozzle close to the end face of the workpiece in a state in which the clutch is disconnected. The speed setting dial is operated to adjust the cutting speed to speed lower than predetermined cutting speed adapted to the workpiece, the clutch is connected, and the traveling truck, in which the preheating flame is formed, is caused to travel at low speed to start cutting. After a cut groove piercing through the workpiece in the thickness direction is formed, the speed setting dial is operated to increase the cutting speed to the predetermined cutting speed to continue the cutting.

When the thickness of the workpiece is relatively large, in the same manner as explained above, the nozzle, in which the preheating flame is formed and from which the cutting oxygen is jetted, is brought close to the end face of the workpiece. The power supply is turned on to cause the traveling truck to travel and a switch for designating a traveling direction is operated to repeat forward and backward movement to form the cut groove piercing through the workpiece in the thickness direction is formed on the end face of the workpiece and thereafter continue the cutting. In this method, the cutting is performed in a state in which the speed of the traveling truck is set to the predetermined cutting speed adapted to the plate thickness and the material of the workpiece.

An operator manually moves the traveling truck to bring the nozzle, in which the preheating flame is formed and from which the cutting oxygen is jetted, close to the end face of the workpiece and stop the nozzle, causes a cutting oxygen jet flow to flow along the end face, and preheats the surface of the workpiece with the preheating flame. When determining that the surface of the workpiece is sufficiently preheated, the operator brings the cutting oxygen jet flow into contact with the end face to form the cut groove piercing through the workpiece in the thickness direction and thereafter connects the clutch to continue the cutting at the predetermined cutting speed.

When the cutting reaches the vicinity of an end point of a target cutting line, in order to correct a delay in a drag line, which occurs in a lower end portion in the thickness direction of the workpiece, the operator operates the speed setting dial to reduce the speed of the traveling truck and continue the cutting and stops the traveling truck when the workpiece is cut off.

After performing piercing in the workpiece with the plasma cutting torch mounted on the traveling truck, when the operator cuts the target cutting line, the traveling truck needs to be stopped while the piecing is performed. Accordingly, a time from a piercing start to a traveling start is controlled by a timer.

When the workpiece is welded using the welding torch, the traveling truck is brought into a stopped state with respect to the workpiece when formation of a bead in a part where the welding is started and crater treatment at the end of a welding line are performed.

As a traveling truck used when performing welding or cutting for a steel plate, the applicant has developed a technique described in Patent Literature 1. The traveling truck described in Patent Literature 1 is capable of stably towing a hose and a cable by attracting the steel plate with a magnet incorporated in the traveling truck.

In particular, Patent Literature 1 has an object of solving a problem in that, when the traveling truck is positioned with respect to a position where the welding is started or a piercing point at the time when the cutting is started, it is difficult to perform fine position adjusting work by an operator if an attraction force by the magnet is acting. The traveling truck includes an operation button for generating a signal for causing the traveling truck to travel at preset welding speed or cutting speed and a very low speed switch adapted to a traveling direction. When the operator selectively operates the very low speed switch in a state in which the power supply is turned on and a signal from the operation button is not generated, the operator controls the traveling truck to travel in a direction of the selected very low speed switch and controls the traveling speed to increase to the preset welding speed and cutting speed according to continuation of the signal.

### Citation List

### Patent Literature

Patent Literature 1: Japanese Patent No. 6021172

### Summary of Invention

### Technical Problem

All of the operations performed when the cutting is started from the end face of the workpiece have inherent problems. That is, when the speed setting dial is operated to decelerate the traveling truck in starting the cutting, it is not always guaranteed that, when increasing the speed of the traveling truck to the cutting speed after the cutting is started, the cutting speed can be set to optimum cutting speed set for the workpiece. Fluctuation in cut surface quality is likely to occur.

When operating the switch for designating the traveling direction to move the traveling truck forward and backward in a state in which the cutting speed is set to the predetermined cutting speed, the operator needs to perform the operation of the switch while confirming a preheating state of the workpiece by the nozzle and a cut groove formation state by the cutting oxygen jet flow. There is a problem in that high proficiency is required for such work for operating the switch while confirming a cutting start state

When the nozzle, from which the cutting oxygen is jetted and in which the preheating flame is formed, is brought close to the end face and stopped to form the cut groove piercing through the workpiece in the thickness direction, if the cutting oxygen jet flow excessively comes into contact with the end face, cutting reaction is started at unintended timing, leading to occurrence of a notch to obstruct the start of the cutting. If the cutting oxygen jet flow excessively separates from the end face, preheating by the preheating flame becomes insufficient to obstruct the start of the cutting. Accordingly, there is a problem in that high proficiency is required for work for starting the cutting for the workpiece in a state in which the nozzle is stopped.

Further, in the cutting, a delay in a drag line due to a delay in cutting reaction occurs on the lower surface side of the workpiece. Cutoff is disabled depending on magnitude of the delay. Therefore, it is necessary to reduce the speed of the traveling truck. The operator needs to perform this work while confirming the delay in the drag line. There is a problem in that proficiency is required as in the start of the cutting.

In this way, there is a problem in that proficiency is required for the operation in starting the cutting of the workpiece from the end face and the operation at the end time of the cutting. This problem becomes more conspicuous as the plate thickness of the workpiece increases.

When piercing is performed on the workpiece by the plasma cutting torch and cutting is started from a point of the piercing, since a time required for the piercing is different according to the plate thickness of the workpiece, timer operation is necessary every time the plate thickness changes. It is likely that work is complicated.

When the welding for the workpiece is started, operation for forming a stable arc is necessary. Operation for reducing the speed of the traveling truck is necessary in order to perform crater treatment at the end point of the welding. However, there is a problem in that proficiency is required for these kinds of deceleration operation as in the case of the cutting.

An object of the present invention is to provide a traveling truck that makes it possible to easily perform operation in starting and ending cutting of a workpiece or starting and ending welding of the workpiece.

### Solution to Problem

In order to solve the problem, a traveling truck according to the present invention is a traveling truck configured to be able to travel with a torch for cutting or welding a workpiece mounted thereon, the traveling truck including: a driving motor that causes the traveling truck to travel; a first switch that generates a traveling signal for designating a direction in which the traveling truck is caused to travel and causing the traveling truck to travel at preset machining speed; a second switch that generates, while operation is continued, a secondary speed signal for causing the traveling truck to travel at preset secondary speed different from the machining speed; a speed setting dial for setting the machining speed or the secondary speed; and a control unit that stores, when the speed setting dial is operated, speed of the traveling truck as the machining speed according to an operation amount of the speed setting dial, stores, when the second switch is operated and the speed setting dial is operated, the speed of the traveling truck as the secondary speed according to the operation amount of the speed setting dial, further controls a rotating direction of the driving motor and a number of revolutions of the driving motor corresponding to machining speed stored in advance according to the traveling signal for designating the traveling direction generated from the first switch and, when the driving motor is in a state in which the driving motor causes the traveling truck to travel in the designated direction at the machining speed, while the secondary speed signal is generated from the second switch and the secondary speed signal continues, keeps the rotating direction of the driving motor and controls a number of revolutions of the driving motor corresponding to the secondary speed stored in advance.

### Advantageous Effects of Invention

In the traveling truck according to the present invention, the traveling direction of the traveling truck can be designated by the first switch. It is possible to cause the traveling truck to travel at machining speed including cutting speed and welding speed suitable for performing target cutting or welding for the workpiece. When the driving motor of the traveling truck is rotating at the number of revolutions corresponding to the machining speed, by continuously generating the secondary speed signal from the second switch, it is possible to rotate the driving motor, which is rotating at the number of resolutions, at the number of revolutions corresponding to the secondary speed. Accordingly, it is possible to cause the traveling truck, which is traveling at the machining speed, to travel at the secondary speed.

It is possible to respectively independently set the machining speed and the secondary speed by operating the speed setting dial and cause the control unit to store the machining speed and the secondary speed. Therefore, when target machining is cutting, the secondary speed can be set to speed at which the cutting can be started from the end face of the workpiece or speed at which a drag line is substantially perpendicular when the cutting ends. Accordingly, it is possible to perform sure cut-in by operating the second switch at a start time of the cutting and perform sure cutoff by operating the second switch at an end time of the cutting. When the target machining is welding, it is possible to perform sure welding by setting the secondary speed to speed necessary for forming a stable arc at a start time of the welding or speed necessary for crater treatment at an end time of the welding and operating the second switch at the start time or the end time of the welding.

As explained above, in the traveling truck according to the present invention, it is possible to perform the start or the end of the sure cutting and the start or the end of the sure welding without requiring high proficiency. In particular, cut-in speed in cutting the workpiece from the end face and speed in setting the drag line substantially perpendicular at the end time of the cutting are substantially the same. By setting the secondary speed to speed at which the cutting start or the cutting end can be surely performed, it is possible to perform satisfactory cutting without requiring proficiency. When the welding is performed on the workpiece, speed at the start time and speed at the end time are also substantially the same. By setting the secondary speed to speed at which treatment at the welding start time or the welding end time can be surely performed, it is possible to perform satisfactory welding without requiring proficiency.

### Brief Description of Drawings

Fig. 1 is a trihedral figure for explaining a configuration of a traveling truck according to an embodiment.
Fig. 2 is a schematic diagram for explaining a configuration of an operation panel of the traveling truck.
Fig. 3 is a block diagram of the traveling truck according to the embodiment.
Fig. 4 is a diagram for explaining a procedure in cutting a steel plate by a nozzle for gas cutting.

### Description of Embodiments

A traveling truck according to the present invention is explained below. The present invention is a traveling truck that is mounted with a torch such as a cutting torch or a welding torch and used in cutting or welding a workpiece represented by a steel plate (hereinafter referred to as "steel plate"). In particular, the traveling truck is configured to be able to surely perform processing in starting cutting the workpiece from an end face or ending the cutting or, after performing piercing in the workpiece, continuously performing the cutting from a point of the piercing, processing in starting welding, or processing for ending the welding.

As the torch mounted on the traveling truck to cut the steel plate, it is possible to selectively adopt a torch for performing gas cutting, a torch for performing plasma cutting, and the like. The gas cutting torch is connected to a fuel gas supply device and an oxygen gas supply device via a plurality of hoses. The plasma cutting torch is connected to a power supply via a cabtyre cable and connected to a plasma gas supply device via a hose.

As the torch mounted on the traveling truck to weld the steel plate, it is possible to selectively adopt various welding torches including a torch for performing carbon dioxide gas arc welding and a torch for performing plasma welding. These torches are connected to a power supply via a cabtyre cable and connected to a gas supply device via a hose.

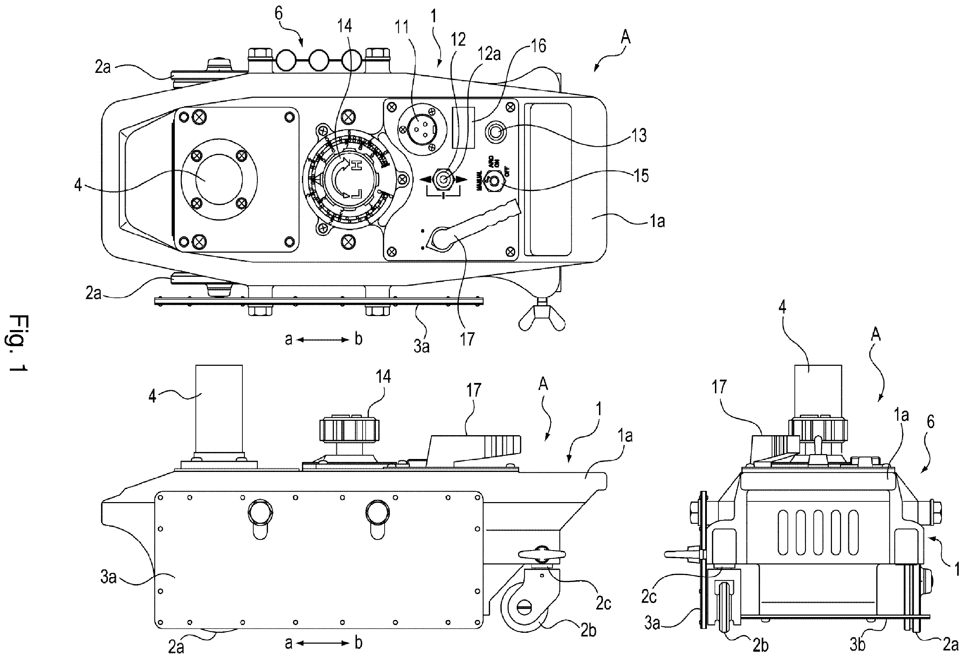

A traveling truck A according to an embodiment is explained below with reference to Fig. 1 to Fig. 3. The traveling truck A according to this embodiment is mounted with a gas cutting torch attached with a nozzle 7 for gas cutting as a torch and is placed on a not-illustrated rail disposed on a steel plate and is configured to be able to travel in arrow "a" and "b" directions. The traveling truck A is capable of performing cutting along the rail by operating the torch according to the traveling in the arrow "a" direction or the arrow "b" direction. Note that, in the following explanation, the torch or the nozzle 7 is sometimes treated the same.

The traveling truck A includes a casing 1 provided with a grip 1a on one end side. One freewheel 2b is disposed on the one end side of the casing 1. A pair of driving wheels 2a is disposed on the other end side. The freewheel 2b is capable of freely turning around a vertical shaft 2c. Therefore, by placing the driving wheels 2a and the freewheel 2b on the rail set on the steel plate, the traveling truck A is capable of traveling along the rail. The traveling truck A is directly placed on the steel plate and an operator grasps the grip 1a and guides the traveling truck A, whereby the traveling truck A is also capable of traveling according to the guidance.

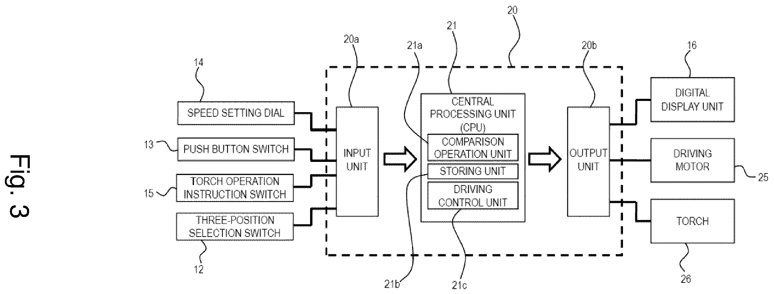

A heat insulating plate 3a is detachably disposed on a side surface of the casing 1. A heat insulating plate 3b is detachably disposed on the bottom surface of the casing 1 as well. On the inside of the casing 1, a driving motor 25 (see Fig. 3) and a transmission device, which transmits rotation of the driving motor 25 to the driving wheels 2a, including a not-illustrated clutch are disposed and a control unit 20 explained below is disposed.

A stand 4 is provided on the upper surface of the casing 1. A torch block including a gas cutting torch attached with the nozzle 7 as a torch 26 is mounted on the stand 4. Note that the torch 26 mounted on the stand 4 is not limited to the gas cutting torch. It is possible to selectively adopt a plasma cutting torch, a welding torch, and the like. Note that reference numeral 6 denotes an attachment section into which an auxiliary nozzle is inserted and housed.

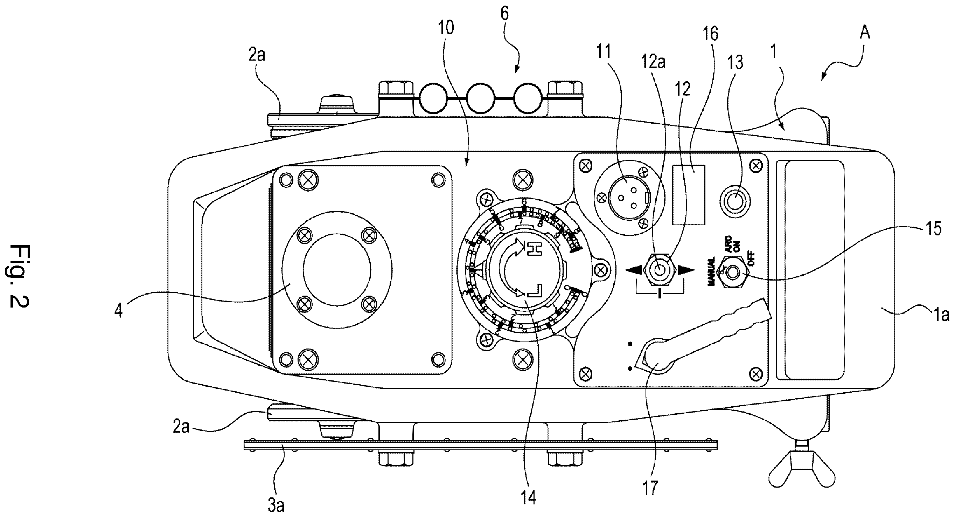

An operation panel 10 illustrated in Fig. 2 is provided on the upper surface of the casing 1. A connector 11, to which a not-illustrated power supply and a not-illustrated arc signal cord are connected, a three-position selection switch 12 functioning as a first switch, a push button switch 13 functioning as a second switch, a speed setting dial 14, a torch operation instruction switch 15, a digital display unit 16, and a clutch lever 17 are respectively disposed on the operation panel 10.

The three-position selection switch 12 is a switch for selecting whether to generate a traveling signal for designating a traveling direction of the traveling truck A and causing the traveling truck A to travel at preset machining speed or not to generate the traveling signal. That is, a lever 12a retains two inverted positions and a neutral position, whereby the three-position selection switch is configured to be able to generate or stop traveling signals corresponding to the respective positions.

Accordingly, it is possible to tilt the lever 12a to any direction to select the arrow "a" direction or the arrow "b" direction and cause the driving motor 25 to start rotation in the selected direction. When the lever 12a is erected to select the neutral position, the rotation of the driving motor 25 is stopped and the traveling truck A changes to a stopped state. Therefore, when the three-position selection switch 12 is operated, the traveling truck A is capable of traveling in the selected direction at the preset machining speed.

The push button switch 13 is a button for generating a secondary speed signal while being pushed. When the secondary speed signal is generated, traveling by the secondary speed signal is prioritized irrespective of the machining speed set in the traveling truck A. Accordingly, the traveling truck A is capable of traveling in a direction designated by the three-position selection switch 12 at preset secondary speed.

Therefore, when the traveling truck A is traveling in the designated direction at the preset machining speed according to the traveling signal from the three-position selection switch 12, if the secondary speed signal is generated from the push button switch 13, the traveling truck A travels at the secondary speed while keeping the traveling direction. While the push button switch 13 is continuously pushed and the secondary speed signal is generated, the traveling at the secondary speed of the traveling truck A continues.

The secondary speed signal by the push button switch 13 neither designates a traveling direction of the traveling truck A nor designates a start of rotation of the driving motor 25 and simply prioritizes the secondary speed different from the machining speed over the machining speed. Accordingly, even if the push button switch 13 is pushed when the three-position selection switch 12 is present in the neutral position, the traveling truck A does not start traveling.

In this embodiment, the push button switch is used as the second switch. However, the second switch does not always need to be the push button switch and may be a snap switch or the like.

The speed setting dial 14 is a dial for setting traveling speed of the traveling truck A according to independent operation or according to joint operation of the three-position selection switch 12 and the push button switch 13. As the traveling speed, there are machining speed suitable for performing target machining on a steel plate and secondary speed suitable when starting and/or ending the target machining.

When the target machining is cutting for the steel plate, optimum cutting speed is set according to whether the torch 26 in use is a gas cutting torch or a plasma cutting torch and according to conditions such as the plate thickness and the material of the steel plate. This cutting speed is set as machining speed. When the target machining is welding, optimum welding speed is set according to whether a torch in use is a carbon dioxide gas welding torch or a plasma welding torch and according to conditions such as the plate thickness and the material of the steel plate and a welding posture (fillet welding, butt welding, or the like). This welding speed is set as machining speed.

The secondary speed is set as speed optimum when the target machining is started and ended. For example, when the target machining is gas cutting and the steel pipe is cut in from the end face, the secondary speed is speed at which it is possible to cause the traveling truck to travel to cut in the steel plate while forming preheating flame in the nozzle and jetting cutting oxygen. The secondary speed is speed at which, at a cutting end time, it is possible to make up for a delay in a drag line generated near the lower surface of the steel plate. Such speed is preferably experimentally calculated in advance because the speed changes according to conditions such as the plate thickness and the material of the workpiece, temperature, and an angle formed by the upper surface and a cutting end face.

When the target machining is plasma cutting and the steel plate is cut from the end face, the secondary speed is set in the same manner as in the case of the gas cutting explained above. After piecing is performed in the steel plate, when cutting is performed starting from a point of the piercing, it is necessary to stop the plasma cutting torch at the piercing point. Accordingly, the secondary speed is set to zero.

When the target machining is welding, the secondary speed is set to speed necessary until an arc stabilizes at a welding start time and speed necessary for performing crater treatment at a welding start time. Treatment speed at this time is preferably experimentally calculated because the treatment speed changes according to the plate thickness and the material of the steel plate and a welding posture.

When the speed setting dial 14 is independently turned, it is possible to set machining speed. It is possible to set the machining speed even if the speed setting dial 14 is turned in a state in which the lever 12a of the three-position selection switch 12 is tilted in any direction.

It is possible to set the secondary speed by turning the speed setting dial 14 while pushing the push button switch 13. In particular, when the secondary speed is set, it is possible to set the secondary speed by pushing the push button switch 13 and turning the speed setting dial 14 irrespective of presence or absence of the traveling signal from the three-position selection switch 12.

When the torch 26 mounted on the traveling truck A is the plasma cutting torch, the torch operation instruction switch 15 instructs a start and interruption of energization for forming a plasma arc. Further, when the mounted torch 26 is the welding torch, the torch operation instruction switch 15 instructs a start and interruption of energization for forming an arc.

When the machining speed or the secondary speed is set for the traveling truck A, the digital display unit 16 displays the set speed. When the traveling truck A is traveling at any speed, the digital display unit 16 displays the speed at which the traveling truck A is actually traveling.

The clutch lever 17 is operated by the operator to transmit rotation of the driving motor 25 to the driving wheels 2a or interrupt the transmission of the rotation.

Next, a control system of the traveling truck A is explained with reference to the block diagram of Fig. 3. In the figure, 20 denotes a control device. The control device 20 has a function of controlling driving of the driving motor 25 of the traveling truck A and operation of the torch 26. The control device 20 includes an input unit 20a to which various signals are input, an output unit 20b that outputs various signals, and a central processing unit 21.

Signals generated by the three-position selection switch 12, the push button switch 13, the speed setting dial 14, and the torch operation instruction switch 15 are input to the input unit 20a. The output unit 20b outputs a driving signal for the driving motor 25, a driving signal for driving the torch 26, and a signal for the digital display unit 16.

The central processing unit 21 includes a comparison operation unit 21a, a storing unit 21b, and a driving control unit 21c. The data storing unit 21b stores various data including data of machining speed and data of secondary speed calculated by the comparison operation unit 21a based on a signal generated from the speed setting dial 14 and an operation program for the torch 26.

The driving control unit 21c reads out, based on signals generated from the three-position selection switch 12, the push button switch 13, and the torch operation instruction switch 16, programs corresponding to the signals from the storing unit 21b and generates driving signals for driving the driving motor 25 and the torch 26 according to the read-out programs.

In this embodiment, the control device 20 is configured to be able to detect the rotation of the driving motor 25 with a rotary encoder and generate rotation data. By obtaining the rotation data, the control device 20 is capable of displaying, on the digital display unit 16, speed at the time when the traveling truck A is traveling.

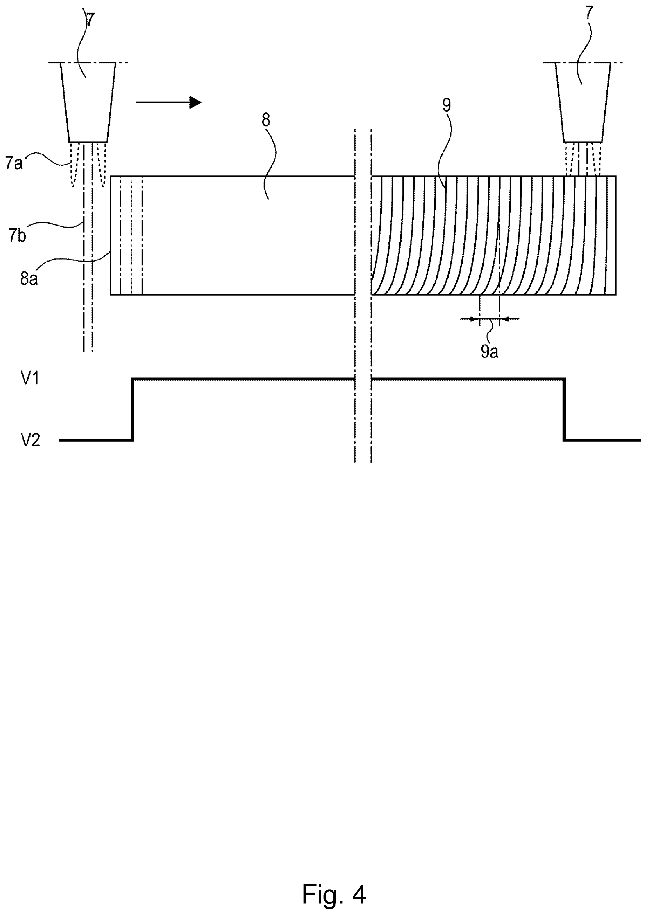

Next, operation in mounting, on the traveling truck A configured as explained above, the gas cutting torch attached with the nozzle 7 for gas cutting, causing the traveling truck A to travel at secondary speed V2 and cut in from an end face 8a of a steel plate 8, and, thereafter, cutting the steel plate 8 at predetermined machining speed V1 (cutting speed), and further ending the cutting at the secondary speed V2 is explained with reference to Fig. 4.

Prior to starting the cutting, a power supply cord is connected to the connector 11 and the machining speed V1 and the secondary speed V2 are respectively set according to the procedure explained above. That is, the speed setting dial 14 is turned while confirming the digital display unit 16. When a displayed speed numerical value becomes proper, the turning is stopped to set the machining speed V1. The push button switch 13 is pushed and the speed setting dial 14 is turned while confirming the digital display unit 16 to set the secondary speed V2.

The position of the lever 12a of the three-position selection switch 12 is set to neural, the clutch lever 17 is operated to disconnect the driving motor 25 and the driving wheels 2a to bring the nozzle 7 close to the end face 8a of the steel plate 8, and, thereafter, the driving motor 25 and the driving wheels 2a are connected. In this state, the traveling truck A keeps the stopped state.

Gases such as preheating oxygen, fuel gas, and cutting oxygen are supplied to the gas cutting torch. After the gases are supplied to the gas cutting torch, an on-off valve disposed in the torch is operated to supply the preheating oxygen and the fuel gas to the nozzle 7, ignite the preheating oxygen and the fuel gas, and form preheating flame 7a. The operator manually performs this operation for forming the preheating flame 7a.

After the preheating flame 7a is formed in the nozzle 7, the cutting oxygen is jetted to form a cutting oxygen air flow 7b. In a state at this time, the preheating flame 7a is in contact with the end face 8a of the steel plate 8 but the cutting oxygen air flow 7b is not in contact with the end face 8a. Consequently, preparation for cutting from the end face 8a is completed for the steel plate 8 by the nozzle 7.

The operator causes the traveling truck A to travel toward the steel plate 8 at the secondary speed V2. It is possible to perform this work by tilting the lever 12a of the three-position selection switch 12 to a target direction in a state in which the push button switch 13 is pushed in advance. It is also possible to perform the work by pushing the push button switch 13 in a state in which the lever 12a of the three-position selection switch 12 is tilted to the target direction.

When the lever 12a of the three-position selection switch 12 tilts, a traveling signal for causing the traveling truck A to travel in the target direction at the machining speed V1 is generated. However, the secondary speed signal generated by pushing the push button switch 13 is prioritized over the traveling signal. As a result, the traveling truck A travels at the secondary speed V2 with the push button switch 13. Therefore, while the push button switch 13 is continuously pushed, since the lever 12a of the three-position selection switch 12 is tilted, the traveling truck A travels at the secondary speed V2 toward the target direction.

The secondary speed V2 is speed that enables cut into the steel plate 8 from the end face 8a and is speed experimentally obtained in advance according to the plate thickness and the material of the steel plate 8. Accordingly, by causing the traveling truck A to continue the traveling at the secondary speed V2, it is possible to cut in from the end face 8a of the steel plate 8 with the nozzle 7.

According to the traveling at the secondary speed V2 of the traveling truck A, the cut into the steel plate 8 by the nozzle 7 progresses. The operator confirms that the jetted cutting oxygen air flow 7b has pierced through the steel plate 8 in the thickness direction of the steel plate 8 and releases the pushing of the push button switch 13. When the secondary speed signal from the push button switch 13 is stopped, the traveling signal for setting the speed of the traveling truck A to the machining speed V1 generated by the three-position selection switch 12 revives. The traveling truck A continues the cutting for the steel plate 8 while traveling at the machining speed V1.

A drag line 9 is formed on a cut surface according to the progress of the cutting. In the drag line 9, a delay 9a occurs between the upper surface side and the lower surface side of the drag line 9 because of a relation between the speed of the nozzle 7 and a time involved in cutting reaction (a combustion time of the steel plate, a time required for eliminating a combustion product, and the like). It is likely that the steel plate 8 cannot be cut off depending on the magnitude of the delay 9a.

Accordingly, when the operator confirms that the nozzle 7 has approached the cutting end point for the steel plate 8, the operator pushes the push button switch 13. As explained above, when the secondary speed signal is generated from the push button switch 13, the secondary speed V2 of the secondary speed signal is prioritized over the machining speed V1. The traveling truck A is caused to perform cutting traveling at the secondary speed V2.

As the traveling truck A performs the cutting traveling at the secondary speed V2, the delay 9a of the drag line 9 is gradually solved. The drag line 9 becomes substantially perpendicular to the surface of the steel plate 8. Accordingly, when the cutting of the steel plate 8 by the nozzle 7 ends, it is possible to realize sure cutoff.

Thereafter, by closing on-off valves provided in the gas cutting torch, it is possible to end the cutting for the steel plate 8.

In the embodiment explained above, the procedure for performing the gas cutting for the steel plate 8 is explained. However, when the workpiece is cut using the plasma cutting torch and when the workpiece is welded using the welding torch, although values of the machining speed V1 and the secondary speed V2 are different, an essential function and an essential procedure are not different.

In particular, when the plasma cutting torch is adopted to perform piercing in the workpiece and the workpiece is cut starting from a point of the piercing, in general, a time required for the piercing is different depending on the plate thickness and the material of the workpiece. Therefore, it is preferable to set the secondary speed to 0. That is, a range of the secondary speed V2 can be set to an optimum value between 0 mm per minute to several ten mm per minute.

### Industrial Applicability

The traveling truck according to the present invention can be used as a small cutting apparatus and a small welding apparatus mounted with a cutting torch and a welding torch mainly operated by an operator.

### Reference Signs List

- A: traveling truck
- V1: machining speed
- V2: secondary speed
- 1: casing
- 1a: grip
- 2a: driving wheel
- 2b: freewheel
- 3a, 3b: heat insulating plate
- 4: stand
- 6: attachment section
- 7: nozzle
- 7a: preheating flame
- 7b: cutting oxygen air flow
- 8: steel plate
- 8a: end face
- 9: drag line
- 9a: delay
- 10: operation panel
- 11: connector
- 12: three-position selection switch
- 12a: lever
- 13: push button switch
- 14: speed setting dial
- 15: torch operation instruction switch
- 16: digital display unit
- 17: clutch lever
- 20: control device
- 20a: input unit
- 20b: output unit
- 21: central processing unit
- 21a: comparison operation unit
- 21b: storing unit
- 21c: driving control unit
- 25: driving motor
- 26: torch

## Claims

1. A traveling truck configured to be able to travel with a torch mounted thereon for cutting or welding a workpiece, the traveling truck comprising:
a driving motor that causes the traveling truck to travel;
a first switch that generates a traveling signal for designating a direction in which the traveling truck is caused to travel and for causing the traveling truck to travel at a predetermined machining speed;
a second switch that generates, while operation is continued, a secondary speed signal for causing the traveling truck to travel at a predetermined secondary speed different from the machining speed;
a speed setting dial for setting the machining speed or the secondary speed; and
a control unit,
wherein the control unit stores, when the speed setting dial is operated, a speed of the traveling truck as the machining speed according to an operation amount of the speed setting dial, and stores, when the second switch is operated and the speed setting dial is operated, a speed of the traveling truck as the secondary speed according to an operation amount of the speed setting dial,
wherein the control unit further controls a rotating direction of the driving motor and a number of revolutions of the driving motor corresponding to a machining speed stored in advance according to the traveling signal for designating the traveling direction generated from the first switch, and
wherein when the driving motor is in a state in which the driving motor causes the traveling truck to travel in the designated direction at the machining speed, while the secondary speed signal is generated from the second switch and the secondary speed signal continues, the control unit keeps the rotating direction of the driving motor and controls a number of revolutions of the driving motor corresponding to the secondary speed stored in advance.
